# EUROPEAN PATENT APPLICATION

(11) **EP 2 172 886 A1**
(43) Date of publication of application: **07.04.2010**
(21) Application number: 08425627.0
(22) Date of filing: 24.09.2008
(51) Int. Cl.: G06Q 10/00, G06Q 30/00

(54) **System of simulation and design-assist of underwater combat apparatuses and method thereof**

(71) Applicant: Whitehead Alenia Sistemi Subacquei S.p.A., 57124 Livorno (IT)
(72) Inventor: Pacini, Francesco, 54039 Ronchi (IT); Signorini, Marco, 57124 Livorno (IT)
(74) Representative: Bergadano, Mirko

(57) **Abstract**

A system (1) of simulation and design-assist of underwater combat apparatuses, having a processing platform (2, 7) for performing a simulation program (15) having a modular architecture. The simulation program includes modules to implement: the definition of a number of mission operation requirements; the selection and configuration, on the basis of said operation requirements, of naval vessels and/or combat and weapon systems from a plurality of models of naval vessel and/or combat and weapon systems; the simulation of the behavior of said naval vessels and/or combat and weapon systems selected and configured, in a mission operation scenario; and the generation of the results of said simulation.

## Description

The present invention relates to a system of simulation and design-assist of underwater combat apparatuses and method thereof, in particular for simulating and parameter evaluating the underwater part of surface and/or underwater naval vessel combat and weapon systems by means of complex computer-implemented military missions.

Traditionally, military system and equipment design adopts a rigid approach, based on specific customer operation requirements. That is, each system or equipment is designed individually to comply with customer operation requirements, without taking the operation scenario and any unforeseen changes in it into account. Very often, in fact, most active naval vessels are not deployed at sea, but kept at a distance from the combat zone, ready to intervene when necessary. Correct planning of surface and underwater naval vessel deployment comprises defining possible evasion and intervention scenarios for other surface or underwater vessels, to support already deployed units. The vessels involved must therefore be able to reach their destination rapidly (either in case of evasion or intervention) and, if necessary, attack effectively with minimum damages to the naval vessels themselves, civilian populations, or any nearby structures. By way of a further example, ammunition fired successively from one vessel or different vessels aiming at the same target must be able to hit the target in coordinated manner to maximize attack effectiveness.

By not taking the above factors into account, known military system design methods may fail to achieve combat systems with the desired degree of effectiveness.

It is an object of the present invention to provide a solution to the above drawbacks by providing a system of simulation and design-assist of underwater combat apparatuses for simulating underwater operation scenarios, to enable, e.g. at the planning and design stage, an appropriate selection of surface and/or underwater naval vessels to be employed, an adequate arming and an optimum deployment of surface and/or underwater naval vessels, to achieve optimum performance of the vessels, both in encounters with enemy vessels and during evasion or intervention in support of other vessels engaged in a given operation scenario.

According to the present invention, there are provided a system of simulation and design-assist of underwater combat apparatuses and a method thereof, as claimed in claims 1 and 12 respectively.

A preferred, non-limiting embodiment of the present invention will be described by way of example with reference to the accompanying drawings, in which:
Figure 1 shows an overall block diagram of the hardware architecture of one embodiment of the integrated simulation and design-assist system according to the present invention;
Figure 2 shows a more detailed block diagram of the integrated simulation and design-assist system of Figure 1, according to the present invention;
Figure 3 shows a more detailed block diagram of a first portion of the integrated simulation and design-assist system of Figure 1 according to the present invention;
Figure 4 shows a more detailed block diagram of a second portion of the integrated simulation and design-assist system of Figure 1 according to the present invention.

A preferred embodiment of the present invention employs an integrated computer simulation system to provide an automatic (or semiautomatic) aid in defining and evaluating performance of the underwater part of surface and underwater naval vessel combat and weapon systems, and in defining and evaluating performance of the vessels themselves, to assist in the design of combat systems. The integrated system according to the present invention also assists in analysing naval vessel operation requirements to achieve the best overall vessel-combat and weapon system configuration in simulated mission scenarios.

By entering system input data in the form of performance and/or operation requirements of the players in the system (e.g. naval vessels and relative combat and weapon systems), by directly selecting (in the case of a semiautomatic system) or assisting selection (in the case of an automatic system) of a number of naval vessels and respective combat and weapon systems, and by defining fleet deployment, a user of the integrated simulation system is able to determine the best arming and/or fleet deployment conditions, and evaluate their effectiveness in various environmental and combat situations. The integrated simulation system, in fact, employs multilevel or modular software architecture by which to design and selectively modify various component parts of the vessels, and to evaluate their performance individually in mission scenarios.

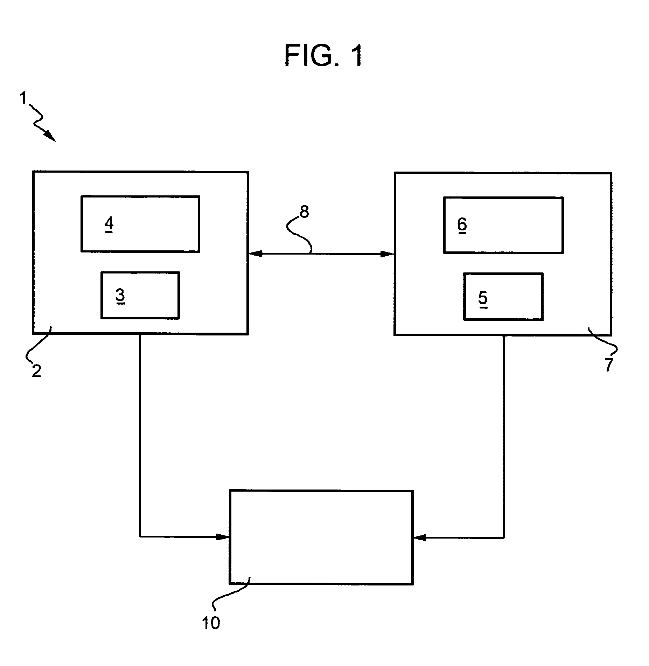

Figure 1 shows a block diagram of the architecture of an integrated simulation system 1.

Integrated simulation system 1 comprises: a first processing platform 2 which, among other things, functions as a user interface, and comprises first data entry means (e.g. a keyboard) 3, and first display means (e.g. a video) 4; a second processing platform 7 which, among other things, functions as a computing engine, is connected in known manner, e.g. by a system bus 8, to the first processing platform 2, and comprises second data entry means 5 and second display means 6; and printing means 10 connected to the first and the second processing platforms 2, 7 to produce a graphic printout of simulated scenario information and results.

Simulation system 1 also comprises one or more data bases, as described in detail below, containing, among other things, naval vessel models, combat and weapon systems, on-board equipment (e.g. motors, batteries, auxiliary equipment, etc.), digital cartographic maps, crews, and other auxiliary/qualifying information. Using the information and models in the data bases, one or more scenarios and missions are generated to evaluate naval vessel and relative combat system performance by simulation.

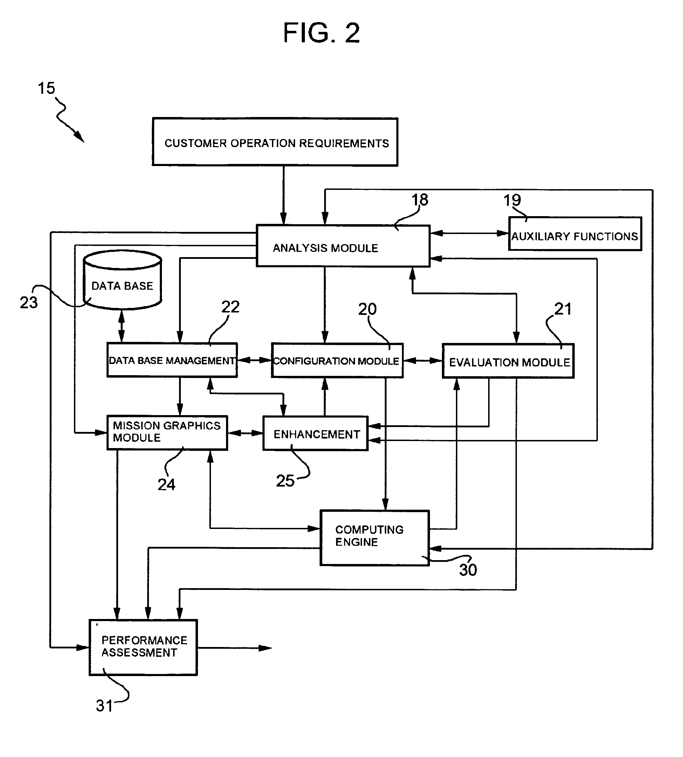

Figure 2 shows a block diagram of the modules of a simulator 15 software-implemented in the Figure 1 integrated simulation system 1.

More specifically, the simulator 15 comprises an analysis module 18 which, by means of an interface, e.g. graphic software with a pull down menu, allows the user of the simulator 15 to select naval vessel and combat system design parameters conforming with given operation and performance requirements, and to set the type of environment and mission for simulation. For example, the operation requirements (i.e. customer-requested performance and typical operating conditions to be complied with by the system) comprise: manoeuvring angles and speed, acceleration, maximum speed, fuel consumption, maximum reachable depth, firing capacity, operating range, radar invisibility, typical (e.g. patrol) missions, typical operating zones (e.g. the Mediterranean). Alternatively, in the case of a fully automatic system, the analysis module 18 may be configured to automatically select and present the user with project parameters conforming with operation and performance requirements.

A typical user of the simulation system 1 may, for example, be a system designer or analyst, and can interact with the integrated simulation system 1 via the graphic interface to enter and modify weapon system parts, combat systems, ammunition and fuel type, naval vessels, and any technical naval and military characteristics in general, and evaluate the mutual impact of the choices made. Complex deployment of surface and underwater naval vessels with relative underwater combat and weapon systems can thus be projected in a wide range of different environments and specific warfare situations. In other words, mission operation scenarios can be defined in minute detail to simulate and evaluate combat system performance as a whole or individually.

Selectable naval vessel project parameters comprise: size (length, maximum width), propulsion type, operating range, crew, transportable combat and weapon systems, and type, if any, of countermeasures and radar evasion systems.

Selectable combat and weapon system project parameters comprise: gun size (width, length, caliber), construction materials, weight, elevation, elevation and rotation speed, firing rate, firing range, precision, ammunition type and feed.

It is also possible to enter specific threats and environmental conditions, assign analysis and evaluation priority, and provide complementary information to assist in defining the tactical combat scenario for simulation.

Simulator 15 also comprises: an auxiliary function module 19 connected functionally to the analysis module 18, and which provides, for example, for controlling the interfaces with the printing means 10 and the system bus 8 for connection to the second processing platform 7; a configuration module 20 connected functionally to the analysis module 18, and which receives the above-defined project parameters to assist the user in selecting (in the case of a semiautomatic system) or to directly select (in the case of an automatic system) naval vessels with respective combat systems, maps, type of mission, propulsion means, crew, etc. (i.e. the combat system component configuration in general) using appropriate filters to only present the user with naval vessels, combat systems, etc. conforming with project parameters; an evaluation module 21 connected to configuration module 20 and storing evaluation criteria, predetermined or user-entered (by defining specific functions), by which to evaluate simulation results and simulated system performance; a first data base 23 interfaced with the analysis module 18 and the configuration module 20 by a data base management module 22, and which contains simulatable virtual naval vessel models, combat and weapon systems, equipment, propulsion means, maps, environment data, etc., and is updatable by the user (or external updating systems); a mission graphics module 24 connected to the analysis module 18 and the data base management module 22, from which it receives project parameters and models extracted from the first data base 23 respectively, to generate the simulation environment by digital cartographic mapping, and define the dynamics of the players involved using a set of coordinates, also called "waypoints"; an optimization module 25 connected to the configuration module 20, the evaluation module 21, the data base management module 22, the mission graphics module 24 and the analysis module 18 to enhance simulation by directly eliminating (in the case of an automatic system) or proposing to the user (in the case of a semiautomatic system) changes to parameters and models entered by configuration module 20; and a computing engine 30 connected to the analysis module 18, the evaluation module 21, the configuration module 20 and the mission graphics module 24 to perform the necessary simulation processing and computing.

More specifically, the evaluation criteria by which to assess the outcome of the simulation include, for example, naval vessel operating range, vertical naval vessel manoeuvring capacity, minimum navigation error, and minimum sensor range.

As stated, the configuration module 20 operates in various modes: a first fully automatic mode, in which selection and configuration are performed independently by computer; a second semiautomatic mode, in which selection and configuration are performed by the user on the basis of a subset of computer-made choices; and a third mode, of manual type, in which selection and configuration are performed entirely by the user with no computer assistance.

Regardless of the operating mode of the configuration module 20, the data base management module 22 acts as an interface between the configuration module 20 and the first data base 23, and extracts the models to be used in the simulation from the first data base 23 as requested by the configuration module 20.

The mission graphics module 24 reproduces the technical characteristics and form of the naval vessels selected for simulation, together with the form of the sea bed, depth, currents, etc., to enable the user to monitor the simulation and actively intervene to make real-time changes to the set naval vessel and/or combat system configurations.

More specifically, changes to the set naval vessel and/or combat system configurations are made by means of the optimization module 25, which controls the simulation and, at the end of it, makes direct changes (in automatic mode) or proposes user changes (in semiautomatic mode) to the set parameters and models to enhance naval vessel and relative combat and weapon system combat performance. More specifically, the optimization module 25 cooperates with the evaluation module 21 to automatically and real-time determine whether the set evaluation criteria have been complied with, to repeatedly determine the best combination of project parameters to conform with the set evaluation criteria, and, at the same time, to enhance combat effectiveness in terms, for example, of the success percentage of the staged attacks. The success percentage of an attack can be assessed on the basis of a mathematical model including, for example, knowledge of the type, defense characteristics, attack resistance, and countermeasures of enemy naval vessels. Selected parameters can be changed cyclically at the optimization stage to determine conformance of each simulated configuration with evaluation criteria; and which project parameters are included or excluded for optimization can be selected by the user.

Computing engine 30 receives the simulation parameters and models from the configuration module 20, and, together with the project parameters from the analysis module 18 and the simulation graphics from the mission graphics module 24, processes the simulation and supplies the results in real time to the evaluation module 21 which, in turn, determines conformance with the evaluation criteria during simulation (i.e. at each computing step).

A performance assessment module 31, connected to the analysis module 18, the evaluation module 21, the mission graphics module 24 and the computing engine 30, generates a performance assessment of naval vessels with respective combat and weapon systems on the basis of the simulation results.

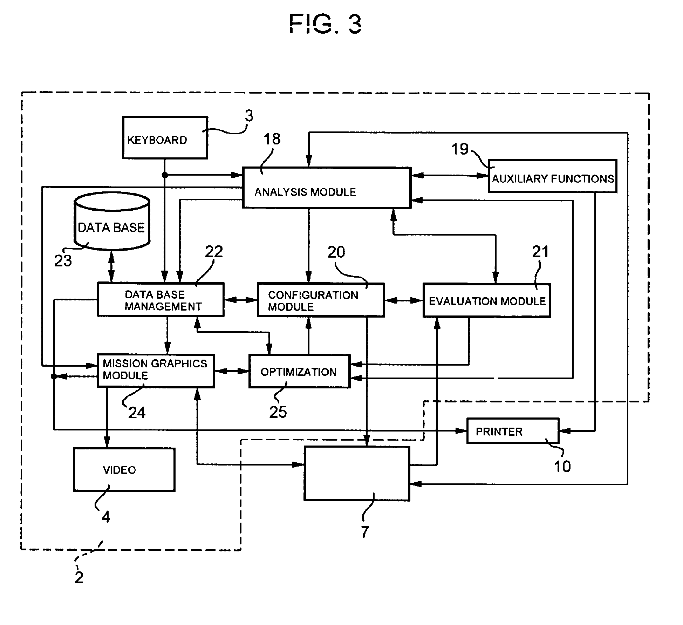

Figure 3 shows the operating blocks of the simulator 15 controlled by, forming part of, and implemented in the first processing platform 2.

More specifically, the first processing platform 2 comprises the analysis module 18, the auxiliary functions module 19, the configuration module 20, the evaluation module 21, the data base management module 22, the first data base 23, the mission graphics module 24, and the optimization module 25.

The first data entry means 3 are connected to the analysis module 18 and the data base management module 22; the first display means 4 are connected to the mission graphics module 24; and the printing means 10 are connected to the configuration module 20, the data base management module 22, the mission graphics module 24, and the auxiliary functions module 19.

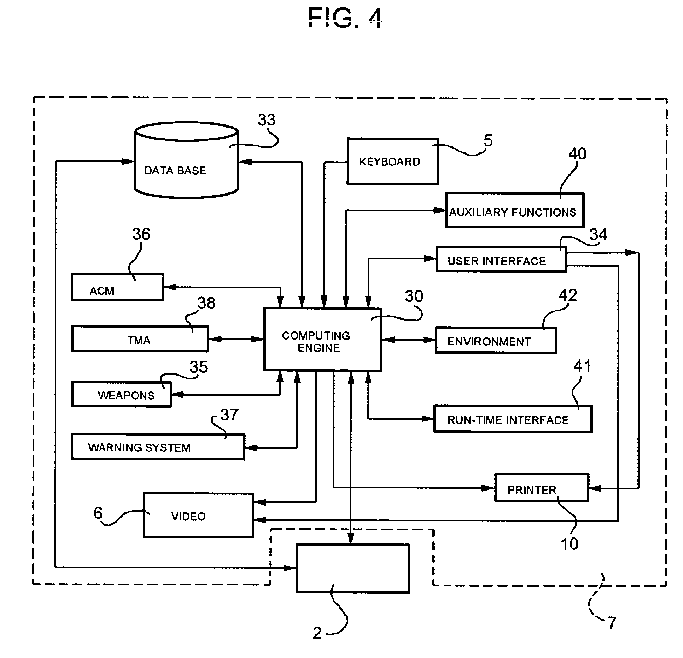

Figure 4 shows a more detailed block diagram of the operating blocks of the simulator 15 controlled by, forming part of, and implemented in the second processing platform 7.

The second processing platform 7 comprises the computing engine 30, which incorporates computing algorithms and cooperates with a second data base 33. The second display means 6, which communicate with the computing engine 30 via a user interface 34, display the model data and parameters set by first processing platform 2.

More specifically, the computing engine 30 simulates the dynamics and acoustics of the naval vessels and relative on-board systems in the operation scenario on the basis of the parameters specified in the defined mission and the data (including project parameters and configuration data) from the first processing platform 2. More specifically, using the defined sea bed characteristics, digital cartographic map data or user-entered information, the computing engine 30 acoustically simulates the combat scenario, and determines and simulates the acoustic relationship between the various players in the operation scenario.

In the example of Figure 4, each naval vessel is assigned a number of combat and/or warning systems, including: a number of weapon systems 35 capable of launching a salvo of identical or similar torpedoes; appropriate countermeasures and countermanoeuvres 36 (ACMs - Acoustic Countermeasures) fired in response to a torpedo alert; and a number of underwater sound sensors (warning system) 37, e.g. sonar (hull sonar, conformal sonar, towed-array). A TMA module 38 of the second processing platform 7 supplies the computing engine 30 with target motion analysis (TMA) information and heavy-duty torpedo wire guidance rules.

The second processing platform 7 also comprises: an auxiliary module 40 containing libraries and mathematical functions (including the mathematical and physical laws of simulation models); a run-time interface module 41 for controlling the real-time data transmitted to the display means and the first processing platform 2; and an environment module 42 for determining and simulating the acoustic relationships between the players in the simulation environment, e.g. on the basis of sea bed characteristics, digital cartographic map data, and user-entered information.

The simulator 15 operates in two modes: joint mode, in which the first and the second processing platforms 2, 7 are connected one another; or stand-alone mode, in which the first and the second processing platforms 2, 7 operate independently.

More specifically, in joint mode, the first processing platform 2 is substantially used to create the mission from the models in the first data base 23. After which, the second processing platform 7 performs the simulation using the chosen models (and does the necessary computing by means of the computing engine 30). During the simulation, naval vessel dynamics and simulation data are advantageously displayed simultaneously on the first and the second display means 4, 6, on the map corresponding to the chosen simulation environment. More specifically, the first display means 4 show the mission being simulated as a whole, while second display means 6 show a detail of the current simulation. As stated, throughout simulation, the first processing platform 2 can automatically assess naval vessel performance on the basis of predetermined, though user-enterable, evaluation criteria, and optimize the chosen parameters accordingly.

More specifically, the graphic interface of the first processing platform 2 comprises one or more menus and dedicated areas by which to enter project parameters, start the simulation, and display the outcome. After entering the necessary parameters, the user presses a simulation start button (not shown), and, during simulation, performed independently by simulator 15, can either halt it to make changes, or wait till it ends to see the end result. At this point, another simulation can be started, e.g. using different project parameters, and the final results compared.

In stand-alone mode, the first processing platform 2 may be used to maintain and update the information in the first data base 23, while the second processing platform 7 simultaneously performs the simulation using the models stored in the memory (and using the second data base 33). In this case, only the second display means 6 can show a graphic display of the current simulation, since, to operate, the first display means 4 need information transfer from the second processing platform 7 to the first processing platform 2 (not used in this mode). Similarly, no automatic naval vessel performance evaluation is made, on account of this being controlled by the evaluation module 21 of the first processing platform 2.

The advantages of the system as described and illustrated herein are obvious.

Integrated simulation and evaluation system 1 provides an automatic or semiautomatic aid in defining and evaluating performance of naval vessels and relative combat systems by simulating even highly complex missions. More specifically, from customer operation specifications, the system provides for constructing and simulating operation scenarios and missions to determine naval vessel and relative combat system performance on the basis of predetermined evaluation criteria, and for issuing a final printout and display of analysis results and engineered requirements.

The system also provides (clearly and fully automatically) for enhancing combat system parameters and configurations to conform with project requirements and specifications. More specifically, the system enhances combat system configurations by means of comparative simulations, e.g. using the same combat scenario, and altering some or all of the sensors and on-board weapons to determine the change in operating performance.

Clearly, changes may be made to the system and method as described and illustrated herein without, however, departing from the scope of the present invention as defined in the accompanying claims.

As stated, integrated system 1 may advantageously operate fully automatically, with no assistance from the user, particularly as regards system parameter and configuration optimization, or semiautomatically to assist user selection.

Integrated simulation system 1 may obviously also comprise a greater number of processing platforms, e.g. connected to a local network.

More generally speaking, the system described is an open one, that can easily be expanded to include other models and functions (e.g. radar models or aircraft, e.g. helicopter, performance models).

## Claims

1. A system (1) of simulation and design-assist of underwater combat apparatuses, comprising a processing platform (2, 7) for performing a simulation program (15) having a modular architecture, comprising modules configured to implement:
- definition of a number of mission operation requirements;
- selection and configuration, on the basis of said operation requirements, of naval vessels and/or combat and weapon systems from a plurality of models of naval vessel and/or combat and weapon systems;
- simulation of the behaviour of said naval vessels and/or combat and weapon systems selected and configured, in a mission operation scenario; and
- generation of the results of said simulation.

2. A system according to claim 1, wherein said simulation program (15) comprises an optimization module (25) configured to: implement, as a function of said simulation, a check to determine conformance of said selected and configured naval vessels and/or combat and weapon systems with a number of performance requirements and/or evaluation criteria; and, in the event one or more of said performance requirements and/or evaluation criteria are not conformed with, repeatedly command further selection and configuration of said models of naval vessels and/or combat and weapon systems, until said performance requirements and/or evaluation criteria are conformed with.

3. A system according to claim 2, wherein said simulation program (15) comprises a computing module (30) configured to perform said simulation and generate said results of said simulation; said optimization module (25) being configured to cooperate with said computing module (30) to implement said check to determine conformance with said performance requirements and/or evaluation criteria.

4. A system according to claim 3, wherein said processing platform (2, 7) comprises a first computer (2) and a second computer (7) which cooperate to perform said simulation program (15); said first and second computer (2, 7) being connected by a system bus (8); said first computer (2) being configured to implement said definition and said selection and configuration to create and transmit a mission scenario to said second computer (7); and said second computer (7) being configured to implement said simulation on the basis of the received said mission scenario.

5. A system according to claim 4, wherein said first (2) and second (7) computer are configured to operate in at least two modes, said at least two modes comprising: a joint operating mode in which, during performance of said simulation by said second computer (7), said first computer (2) implements said check to determine conformance with said performance requirements and/or evaluation criteria, modifies said mission scenario on the basis of the outcome of said check, and repeatedly commands said further selection and configuration of said models of naval vessels and/or combat and weapon systems; and a stand-alone mode in which said second computer (7) performs said simulation independently of said first computer (2), and, during performance of said simulation by said second computer (7), said first computer (2) is able to maintain and/or update said models of naval vessels and/or combat and weapon systems.

6. A system according to claim 5, wherein said simulation program (15) also comprises a mission graphics module (24) for generating a graphic representation of said simulation; and wherein said first and second computer (2, 7) comprise respective display means (4, 6) which cooperate, in said joint operating mode, with said mission graphics module (24) to respectively show an overall display of said mission scenario, and a detailed display of a portion of said mission scenario being simulated.

7. A system according to any one of the preceding claims, also comprising a first data base (23) for storing said number of models of naval vessel and/or combat and weapon systems.

8. A system according to any one of the preceding claims, also comprising an interface module (18, 20) for assisting a user, via a graphic interface, in defining said operation requirements, and in selecting and configuring models of naval vessels and/or combat and weapon systems potentially capable of conforming with said operation requirements.

9. A system according to claim 5, wherein said simulation program (15) also comprises an evaluation module (21) for setting a number of performance requirements and/or evaluation criteria, and assessing said results of said simulation on the basis of said performance requirements and/or evaluation criteria; said optimization module (25) cooperating with said evaluation module (21) to perform said check.

10. A system according to claim 9, wherein said optimization module (25) is configured to provide an optimum underwater combat configuration of said underwater combat apparatuses comprising a combination of models of naval vessels and/or combat and weapon systems, which maximizes the combat effectiveness of the naval vessels and/or combat and weapon systems, while at the same time conforming with said operation requirements and satisfying said performance requirements and said evaluation criteria.

11. A system according to any one of the preceding claims, wherein said operation requirements comprise one of more of the following characteristics: manoeuvring angles and speed, acceleration, maximum speed, fuel consumption, maximum reachable depth, firing capacity, operating range, radar invisibility of said naval vessels and/or combat and weapon systems.

12. A method for simulating and assisting the design of underwater combat apparatuses, comprising the steps of:
- defining a plurality of mission operation requirements;
- selecting and configuring, on the basis of said operation requirements, naval vessels and/or combat and weapon systems from a plurality of models of naval vessel and/or combat and weapon system;
- simulating the behaviour of said naval vessels and/or combat and weapon systems selected and configured, in a mission operation scenario; and
- generating the results of said simulation.

13. A method according to claim 12, wherein the simulating step comprises: determining conformance of said selected and configured naval vessels and/or combat and weapon systems with a number of performance requirements and/or evaluation criteria; and, in the event one or more of said performance requirements and/or evaluation criteria are not conformed with, repeatedly proposing further models of naval vessel and/or combat and weapon systems or specific components of them, until said performance requirements and/or evaluation criteria are conformed with.

14. A method according to claim 12 or 13, also comprising the step of implementing a digital cartographic map of an underwater environment in which to perform said simulation; and wherein said simulating step comprises simulating acoustic relationships between said naval vessels and/or combat and weapon systems in said underwater environment.

15. A software product, comprising computer instructions designed to implement, when executed in a processing unit (2, 7), the system (1) of simulation and design-assist of underwater combat apparatuses as claimed in any one of claims 1 to 11.
